# EUROPEAN PATENT APPLICATION

(11) **EP 2 546 147 A1**
(43) Date of publication of application: **16.01.2013**
(21) Application number: 11753068.3
(22) Date of filing: 06.01.2011
(51) Int. Cl.: B64D 15/04

(54) **DEICING DEVICE FOR LEADING EDGE OF WING OF AIRCRAFT, AND AIRCRAFT MAIN WING**

(30) Priority: 08.03.2010 JP 2010050885
(71) Applicant: Mitsubishi Heavy Industries, Ltd., Tokyo 108-8215 (JP)
(72) Inventor: SAITO, Isao, Tokyo 108-8215, (JP); ISHIGURO, Tatsuo, Tokyo 108-8215, (JP); MIZUKAMI, Satoshi, Tokyo 108-8215, (JP)
(74) Representative: Henkel, Breuer & Partner
(86) International application number: PCT/JP2011/050098
(87) International publication number: WO 2011/111405

(57) **Abstract**

A deicing device for a wing leading edge of an aircraft and an aircraft main wing are constituted by providing a hot air passage (46) by a curve-shaped main-wing leading edge (41) and a curve-shaped guide plate (42) arranged inside the main-wing leading edge (41) with a predetermined space therefrom, along an inner side of the main-wing leading edge (41), as well as by providing a duct pipe (47) that supplies bleed air to the hot air passage (46), in which in the hot air passage (46), a space at a distal end of the main-wing leading edge (41) is formed to be smaller than that on a downstream side in a bleed-air flowing direction. With this configuration, by heating a wing leading edge effectively, it is possible to appropriately prevent formation of ice adhering to an outer side of the wing leading edge.

## Description

### Field

The present invention relates to a deicing device for a wing leading edge of an aircraft and an aircraft main wing that prevent formation of ice adhering to an outer side of a wing leading edge of an aircraft during flying by supplying bleed air to the wing leading edge.

### Background

Conventional deicing devices for a wing leading edge of an aircraft are described in Patent Literatures 1 to 3 mentioned below. In each of the deicing devices for a main-wing leading edge described in these Patent Literatures, an inner space of a main-wing leading edge, which is surrounded by an outer wall, an inner wall, and a partition, is defined as a hot air chamber, and a duct that can supply high-temperature air (bleed air) extracted from an engine for an aircraft to an inner side of the main-wing leading edge is arranged. With this configuration, bleed air supplied to the duct is injected into the hot air chamber to flow the bleed air rearward from the main-wing leading edge in order to prevent formation of ice particles adhering to the outer side of the main-wing leading edge.

### Citation List

### Patent Literatures

Patent Literature 1: Japanese Patent No. 3529910
Patent Literature 2: Japanese Patent No. 3647612
Patent Literature 3: United States Patent No. 5011098

### Summary

### Technical Problem

Meanwhile, on an outer side of a main-wing leading edge of an aircraft, ice particles tend to be formed on its distal-end side. However, in the conventional deicing devices for a wing leading edge of an aircraft, because bleed air is supplied from the duct toward the hot air chamber at the distal end of the main-wing leading edge, the distal end and its neighboring region are intensively heated. This causes uneven heating due to a shortage of heat quantity on the downstream side of the bleed-air flow, resulting in a difficulty in appropriately preventing formation of ice particles adhering to the outer side of the main-wing leading edge.

The present invention has been achieved to solve the above problems, and an object of the present invention is to provide a deicing device for a wing leading edge of an aircraft and an aircraft main wing that can appropriately prevent formation of ice adhering to an outer side of a wing leading edge by effectively heating the wing leading edge.

### Solution to Problem

According to an aspect of the present invention, a deicing device for a wing leading edge of an aircraft includes: a curve-shaped wing leading edge; a curve-shaped guide plate arranged inside the wing leading edge with a predetermined space therefrom; a hot air passage provided by the wing leading edge and the guide plate along an inner side of the wing leading edge; and a bleed-air supply unit that supplies bleed air to the hot air passage. In the hot air passage, a flow passage area on a distal-end side of the wing leading edge and a flow passage area on a downstream side in a bleed-air flowing direction are set to be different.

Accordingly, the hot air passage has different flow passage areas on the distal-end side of the wing leading edge and on the bleed-air downstream side. Therefore, bleed air supplied from the bleed-air supply unit to the hot air passage is supplied stably over the entire region of the hot air passage, and thus this configuration promotes heat exchange with the wing leading edge and heating of the wing leading edge effectively, thereby appropriately preventing formation of ice adhering to the outer side of the wing leading edge.

Advantageously, in the deicing device for a wing leading edge of an aircraft, in the hot air passage, a flow passage area on a distal-end side of the wing leading edge is formed to be smaller than a flow passage area on a downstream side in a bleed-air flowing direction.

Accordingly, in the hot air passage, a space at the distal end of the wing leading edge is formed to be smaller than that on the downstream side. This allows bleed air supplied from the bleed-air supply unit to the hot air passage to flow at a high speed at the distal end of the wing leading edge and to be supplied stably to the bleed-air downstream side, thereby heating the wing leading edge effectively.

Advantageously, in the deicing device for a wing leading edge of an aircraft, in the hot air passage, a flow passage area on a downstream side in a bleed-air flowing direction is formed to be smaller than a flow passage area on a distal-end side of the wing leading edge.

Accordingly, in the warm air passage, a flow passage area on the downstream side in the bleed-air flowing direction is formed to be smaller than a flow passage area on the wing leading edge side. This allows bleed air supplied from the bleed-air supply unit to the hot air passage to flow at a high speed on the downstream side and to be supplied stably to the bleed-air downstream side, thereby heating the wing leading edge effectively.

Advantageously, in the deicing device for a wing leading edge of an aircraft, a space-amount adjusting member that sets an amount of a space in the hot air passage to a predetermined amount is provided between the wing leading edge and the guide plate.

Accordingly, by the space-amount adjusting member, the space in the hot air passage can be easily set to a desired space amount, such as setting the space at the distal end of the main-wing leading edge to be smaller than that on the downstream side in the bleed-air flowing direction, and this leads to an improvement in assemblability.

Advantageously, in the deicing device for a wing leading edge of an aircraft, the space-amount adjusting member functions as a connecting member that connects the wing leading edge and the guide plate.

Accordingly, because the space-amount adjusting member functions as the connecting member, it is possible to suppress an increase in the number and weight of the constituent members, and to prevent a complicated structure and a cost increase. Furthermore, by the space-amount adjusting member connected to the wing leading edge, a heat transfer area is increased and a turbulent flow is generated, thereby increasing the quantity of heat received by the wing leading edge. This leads to an improvement in heat exchange efficiency between bleed air and the wing leading edge.

Advantageously, in the deicing device for a wing leading edge of an aircraft, a fin is arranged in the hot air passage.

Accordingly, because the fin is provided in the hot air passage, a heat transfer area of bleed air is further increased and a turbulent flow is generated, thereby increasing the quantity of heat received by the wing leading edge. This leads to an improvement in heat exchange efficiency between the bleed air and the wing leading edge.

Advantageously, in the deicing device for a wing leading edge of an aircraft, a second guide plate is arranged inside the guide plate with a predetermined space therefrom, so as to provide a second hot air passage through which bleed air to be discharged from the hot air passage flows along an inner side of the hot air passage.

Accordingly, the temperature of bleed air flowing through the hot air passage is maintained by bleed air flowing through the second hot air passage, so that the wing leading edge can be efficiently heated by the bleed air.

Advantageously, in the deicing device for a wing leading edge of an aircraft, a bleed air heater that supplies bleed air extracted from a compressor of a gas turbine for an aircraft to the bleed-air supply unit after the bleed air is heated by a high-temperature device incorporated in an aircraft is provided.

Accordingly, because the bleed air is supplied to the bleed-air supply unit after being heated by the bleed-air heater, the wing leading edge can be securely heated by the bleed air.

According to an aspect of the present invention, an aircraft main wing provided with any one of the deicing device for a wing leading edge of an aircraft described above.

Accordingly, bleed air supplied from the bleed-air supply unit to the hot air passage is supplied stably over the entire region of the hot air passage, and thus this configuration promotes heat exchange with the wing leading edge and heating of the wing leading edge effectively. Therefore, it is possible to appropriately prevent formation of ice adhering to an outer side of the wing leading edge.

### Advantageous Effects of Invention

According to the deicing device for a wing leading edge of an aircraft and the aircraft main wing of the present invention, in the hot air passage provided by the wing leading edge and the guide plate, the flow passage area on the distal-end side of the wing leading edge and the flow passage area on the downstream side in the bleed-air flowing direction are set to be different. Therefore, it is possible to supply bleed air stably over the entire region of the hot air passage, and by promoting heat exchange with the wing leading edge and heating the wing leading edge effectively, it is possible to appropriately prevent formation of ice adhering to an outer side of the wing leading edge.

### Brief Description of Drawings

FIG. 1 is a schematic configuration diagram of a deicing device for a wing leading edge of an aircraft according to a first embodiment of the present invention.
FIG. 2 is a II-II cross section of relevant parts of a main wing to which the deicing device for a wing leading edge of an aircraft according the first embodiment is applied.
FIG. 3A is a cross-sectional view of a structure of connecting an outer plate and a guide plate of the deicing device for a wing leading edge of an aircraft according to the first embodiment.
FIG. 3B is a cross-sectional view of a modification of the structure of connecting the outer plate and the guide plate of the deicing device for a wing leading edge of an aircraft according to the first embodiment.
FIG. 3C is a cross-sectional view of the modification of the structure of connecting the outer plate and the guide plate of the deicing device for a wing leading edge of an aircraft according to the first embodiment.
FIG. 4 is a cross-sectional view of relevant parts of a main wing to which a deicing device for a wing leading edge of an aircraft according to a second embodiment of the present invention is applied.
FIG. 5 is a schematic configuration diagram of a deicing device for a wing leading edge of an aircraft according to a third embodiment of the present invention.
FIG. 6 is a schematic configuration diagram of a deicing device for a wing leading edge of an aircraft according to a fourth embodiment of the present invention. Description of Embodiments

Exemplary embodiments of a deicing device for a wing leading edge of an aircraft and an aircraft main wing according to the present invention will be explained below in detail with reference to the accompanying drawings. The present invention is not limited to the embodiments.

### First embodiment

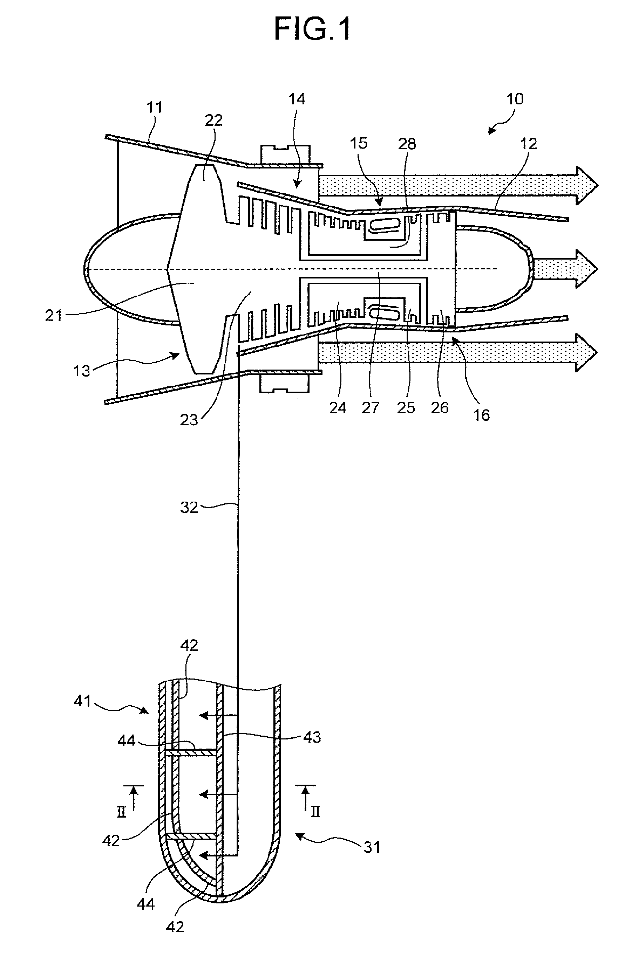

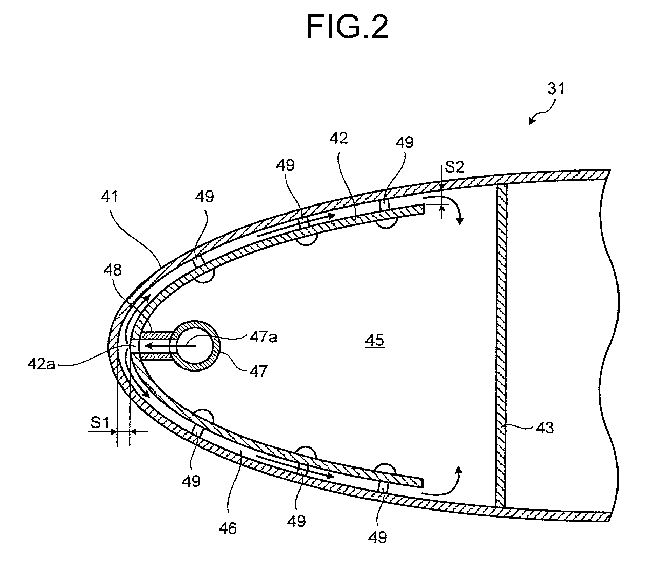

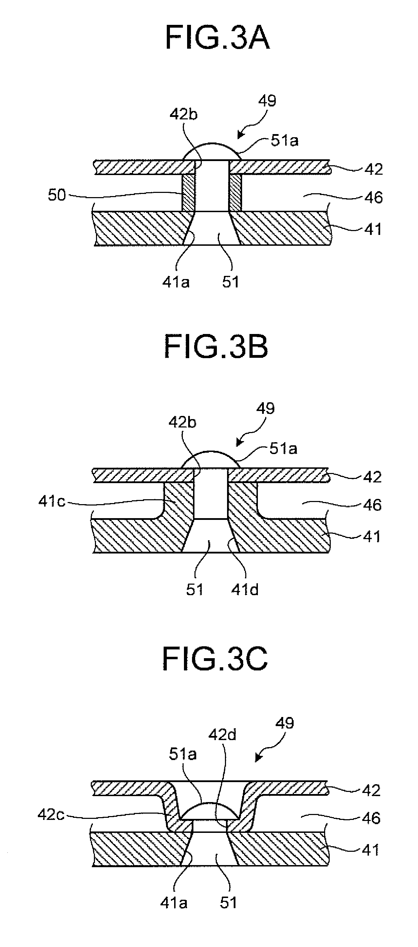

FIG. 1 is a schematic configuration diagram of a deicing device for a wing leading edge of an aircraft according to a first embodiment of the present invention, FIG. 2 is a II-II cross section of relevant parts of a main wing to which the deicing device for a wing leading edge of an aircraft according the first embodiment is applied, FIG. 3A is a cross-sectional view of a structure of connecting an outer plate and a guide plate of the deicing device for a wing leading edge of an aircraft according to the first embodiment, and FIGS. 3B and 3C are cross-sectional views of a modification of the structure of connecting the outer plate and the guide plate of the deicing device for a wing leading edge of an aircraft according to the first embodiment.

In the first embodiment, as shown in FIG. 1, a gas turbine 10 used as an engine for an aircraft is constituted by including a fan casing 11 and a main body casing 12, accommodating a fan 13 in the fan casing 11, and accommodating a compressor 14, a combustor 15, and a turbine 16 in the main body casing 12.

The fan 13 is constituted by attaching a plurality of fan blades 22 to an outer circumference of a rotary shaft 21. The compressor 14 includes a low-pressure compressor 23 and a high-pressure compressor 24. The combustor 15 is positioned on the downstream side relative to the compressor 14 and arranged in a circumferential direction. The turbine 16 is positioned on the downstream side relative to the combustor 15 and includes a high-pressure turbine 25 and a low-pressure turbine 26. The rotary shaft 21 of the fan 13 and the low-pressure compressor 23 are connected, and the low-pressure compressor 23 and the low-pressure turbine 26 are connected by a first rotor shaft 27. The high-pressure compressor 24 and the high-pressure turbine 25 are connected by a second cylindrical rotor shaft 28 positioned on an outer circumferential side of the first rotor shaft 27.

Accordingly, in the compressor 14, air taken in from an air intake port is compressed by passing through a plurality of turbine vanes and turbine blades (not shown) of the low-pressure compressor 23 and the high-pressure compressor 24, and the air becomes high-temperature and high-pressure compressed air. In the combustor 15, predetermined fuel is supplied to this compressed air, thereby combusting a mixture of the air and fuel. The high-temperature and high-pressure combustion gas generated in the combustor 15 as working fluid passes through a plurality of turbine vanes and turbine blades (not shown) of the high-pressure turbine 25 and the low-pressure turbine 26, which constitute the turbine 16, thereby driving the high-pressure turbine 25 and the low-pressure turbine 26 to rotate. In this case, a rotational force of the low-pressure turbine 26 is transmitted to the low-pressure compressor 23 through the first rotor shaft 27 to drive the low-pressure compressor 23. Furthermore, a rotational force of the high-pressure turbine 25 is transmitted to the high-pressure compressor 24 through the second rotor shaft 28 to drive the high-pressure compressor 24. As a result, the fan 13 can be driven, so that thrust can be produced mainly by the fan 13.

The deicing device for a wing leading edge of an aircraft according to the first embodiment supplies bleed air extracted from the compressor 14 of the gas turbine 10 described above used as an engine for an aircraft to a leading edge of a main wing 31 to prevent formation of ice that tends to adhere to this main-wing leading edge. Therefore, there is provided a bleed-air supply line 32 extending from an upstream position of the low-pressure compressor 23 in the compressor 14 to the leading edge of the main wing 31.

A structure of the main wing 31 is explained here in detail. As shown in FIG. 2, a main-wing leading edge 41 has a distal end formed into a curved shape by, for example, joining upper and lower curved plates. The main-wing leading edge 41 is a portion proximate to a leading edge of the main wing 31. A guide plate 42 is arranged inside the main-wing leading edge 41 with a predetermined space therefrom, and has a distal end formed into a curved shape by, for example, joining upper and lower curved plates, similarly to the main-wing leading edge 41. The main-wing leading edge 41 and the guide plate 42 can be formed by a single member, rather than by joining upper and lower plates.

The main-wing leading edge 41 is provided in the longitudinal direction of the main wing 31, and the guide plate 42 has a predetermined length in the longitudinal direction of the main wing 31 or the width direction of an aircraft. A plurality of the guide plates 42 are arranged in this direction. That is, in the main-wing leading edge 41, a partition 43 is formed in the longitudinal direction of the main wing 31 (in the perpendicular direction in the drawing of FIG. 2), while partitions 44 extending in the front-rear direction of the main wing 31 (in the left-right direction in FIG. 2) are formed in the longitudinal direction of the main wing 31 at a predetermined interval. Each of the guide plates 42 has ends in the longitudinal direction of the main wing 31. These ends are respectively in contact with or fixed to their corresponding end surfaces of the partitions 44.

A hot air chamber 45 is defined or surrounded by the main-wing leading edge 41, the rear partition 43, and the left and right partitions 44. A hot air passage 46 is formed as a spatial portion interposed between the main-wing leading edge 41 and the guide plate 42, is provided along the inner side of the main-wing leading edge 41 from the distal end of the main-wing leading edge 41 to the rear side, and is opened to the hot air chamber 45 at its rear end.

A duct pipe 47 as a bleed-air supply unit is provided in the hot air chamber 45 so as to be arranged on the distal-end side of the main-wing leading edge 41 and adjacent to the guide plate 42. The duct pipe 47 is provided to be penetrating through the partitions 44 in the longitudinal direction of the main wing 31, the bleed-air supply line 32 (see FIG. 1) is connected to the duct pipe 47 at a predetermined position, and the respective ends are closed. The guide plate 42 has formed thereon an opening 42a at a position corresponding to the distal end of the main-wing leading edge 41, while the duct pipe 47 has formed thereon an injection hole 47a at a position corresponding to the opening 42a that opens toward the front of the main-wing leading edge 41. The opening 42a of the guide plate 42 and the injection hole 47a of the duct pipe 47 are connected by a connecting tube 48. In this case, a plurality of sets of the openings 42a, the injection holes 47a, and the connecting tubes 48 are provided at a predetermined interval for each of the guide plates 42.

Therefore, as shown in FIGS. 1 and 2, bleed air extracted from an upstream position of the compressor 14 (the low-pressure compressor 23) of the gas turbine 10 is supplied to the main-wing leading edge 41 through the bleed-air supply line 32. Bleed air to be supplied to the main-wing leading edge 41 flows into the duct pipe 47 and is supplied from the injection hole 47a through the connection tube 48 and the opening 42a to the hot air passage 46 at the distal end of the main-wing leading edge 41. The bleed air supplied to the hot air passage 46 then flows through the hot air chamber 46 from the distal end of the main-wing leading edge 41 to the rear side along the inner side of the main-wing leading edge 41 and reaches the hot air chamber 45. With this configuration, the main-wing leading edge 41 is heated by this bleed air. Because the bleed air having flown into the hot air chamber 45 has a low temperature and a pressure close to the atmospheric pressure, it is discharged from the aircraft.

In the first embodiment, in the hot air passage 46, a space (a flow passage area) on the distal-end side of the main-wing leading edge 41 and a space (a flow passage area) on the downstream side in the bleed-air flowing direction are set to be different. Specifically, in the hot air passage 46, a space (a flow passage area) on the distal-end side of the main-wing leading edge 41 is formed to be smaller than a space (a flow passage area) on the downstream side in the bleed-air flowing direction.

That is, in the hot air passage 46, a space S2 at the rear end of the main-wing leading edge 41 is set to be larger than a space S1 at the distal end of the main-wing leading edge 41. As a result, the hot air passage 46 is wider toward a further downstream side in the bleed-air flowing direction. In the present embodiment, because the duct pipe 47 is provided to be opposite to the distal end of the main-wing leading edge 41, a space at a bleed-air supply position of the main-wing leading edge 41 is formed to be smaller than that on the downstream side in the bleed-air flowing direction.

In this case, a fixture 49 is provided between the main-wing leading edge 41 and the guide plate 42. The fixture 49 functions as a space-amount adjusting member that sets the amount of a space in the hot air passage 46 or as a connecting member that connects the main-wing leading edge 41 and the guide plate 42. That is, in the fixture 49, as shown in FIG. 3A, the main-wing leading edge 41 has formed thereon a countersink 41a at a predetermined position, and the guide plate 42 has formed thereon a mounting hole 42b at a predetermined position. The height of a bush 50 is set depending on the space between the main-wing leading edge 41 and the guide plate 42 or the space in the hot air passage 46. That is, the height of the bush 50 is adjusted according to a desired set amount of the space in the hot air passage 46. A countersunk rivet 51 penetrates from the outer side of the main-wing leading edge 41 through the countersink 41a, the bush 50, and the mounting hole 42b with its distal end 51a being flattened. Therefore, the main-wing leading edge 41 and the guide plate 42 are joined by the countersunk rivet 51 via the bush 50 with a predetermined space therebetween, and thus the hot air passage 46 can be formed with a desired space amount.

The fixture 49 that functions as a space-amount adjusting member that sets the amount of the space between the main-wing leading edge 41 and the guide plate 42 (the space in the hot air passage 46) or as a connecting member that connects the main-wing leading edge 41 and the guide plate 42 is not limited to the fixture described above.

For example, as shown in FIG. 3B, the main-wing leading edge 41 has formed thereon a hole 41d having a flange 41c at a predetermined position, and the guide plate 42 has formed thereon the mounting hole 42b at a predetermined position. The height of the flange 41c is set depending on the space between the main-wing leading edge 41 and the guide plate 42 or the space in the hot air passage 46. That is, the height of the flange 41c is adjusted according to a desired set amount of the space in the hot air passage 46. The countersunk rivet 51 penetrates from the outer side of the main-wing leading edge 41 through the hole 41d, the flange 41c, and the mounting hole 42b with its distal end 51a being flattened. Therefore, the main-wing leading edge 41 and the guide plate 42 are joined by the countersunk rivet 51 via the flange 41c with a predetermined space therebetween, and thus the hot air passage 46 can be formed with a desired space amount.

As shown in FIG. 3C, the main-wing leading edge 41 has formed thereon a hole 41a at a predetermined position, and the guide plate 42 has formed thereon a hole 42d with a contracted portion 42c at a predetermined position. The height of the contracted portion 42c is set depending on the space between the main-wing leading edge 41 and the guide plate 42 or the space in the hot air passage 46. That is, the height of the contracted portion 42c is adjusted according to a desired set amount of the space in the hot air passage 46. The countersunk rivet 51 penetrates from the outer side of the main-wing leading edge 41 through the countersink 41a and the hole 42d with its distal end 51a being flattened. Therefore, the main-wing leading edge 41 and the guide plate 42 are joined by the countersunk rivet 51 via the contracted portion 42c with a predetermined space therebetween, and thus the hot air passage 46 can be formed with a desired space amount.

The space-amount adjusting member and the connecting member are not limited to the configurations described above, and for example, a bending portion can be formed at the end of the guide member 42 and fixed by a rivet or the like. Other methods such as using a screw, a bolt and a nut, or welding can be additionally employed.

In the deicing device for a wing leading edge of an aircraft according to the first embodiment configured as described above, in the hot air passage 46, a space at the distal end of the main-wing leading edge 41 is formed to be smaller than that on the downstream side in the bleed-air flowing direction. Therefore, as shown in FIG. 2, when bleed air is supplied from the duct pipe 47 through the connecting tube 48 to the hot air passage 46 at the distal end of the main-wing leading edge 41, and the bleed air then flows upward and downward separately from the distal end to the rear side along the inner side of the main-wing leading edge 41. At this time, the bleed air flows through the hot air passage 46 at a higher speed at the distal end of the main-wing leading edge 41 where the flow passage is narrower, and flows at a lower speed as it approaches to the rear side. With this configuration, the bleed air flows stably in the hot air passage 46 toward its downstream side, and promotes heat exchange with the main-wing leading edge 41 from its distal end to its downstream side, so that the entire region of the main-wing leading edge 41 is effectively heated, thereby preventing formation of ice adhering to the outer side of the distal end of the main-wing leading edge 41.

As described above, the deicing device for a wing leading edge of an aircraft and the aircraft main wing according to the first embodiment are constituted by providing the hot air passage 46 by the curve-shaped main-wing leading edge 41 and the curve-shaped guide plate 42 arranged inside the main-wing leading edge 41 with a predetermined space therefrom, along the inner side of the main-wing leading edge 41, as well as by providing the duct pipe 47 that supplies bleed air to the hot air passage 46. In the hot air passage 46, a space at the distal end of the main-wing leading edge 41 is formed to be smaller than that on the downstream side in the bleed-air flowing direction.

Accordingly, in the hot air passage 46, bleed air supplied from the duct pipe 47 through the connecting tube 48 to the hot air passage 46 flows at a high speed through the smaller space at the distal end of the main-wing leading edge 41 and flows stably toward the downstream side. This bleed air promotes heat exchange with the main-wing leading edge 41 from its distal end to its downstream side, so that the entire region of the main-wing leading edge 41 is effectively heated, thereby appropriately preventing formation of ice adhering to the outer side of the main-wing leading edge 41.

Furthermore, in the deicing device for a wing leading edge of an aircraft according to the first embodiment, the fixture 49 (the bush 50, the flange 41c, and the contracted portion 42c) as a space-amount adjusting member that sets the amount of the space in the hot air passage 46 to a predetermined amount is provided between the main-wing leading edge 41 and the guide plate 42. Therefore, by the fixture 49, the space in the hot air passage 46 can be easily set to a desired space amount, such as setting the space at the distal end of the main-wing leading edge 41 smaller than that on the downstream side in the bleed-air flowing direction, and this leads to an improvement in assemblability.

Further, in the deicing device for a wing leading edge of an aircraft according to the first embodiment, the fixture 49 as a space-amount adjusting member is caused to function as a connecting member that connects the main-wing leading edge 41 and the guide plate 42. Accordingly, because the space-amount adjusting member functions as the connecting member, it is possible to prevent an increase in the number and weight of the constituent members, and to prevent a complicated structure and a cost increase. In addition, by the fixture 49 that is connected to the main-wing leading edge 41, a heat transfer area is increased and a turbulent flow is generated, thereby increasing the quantity of heat received by the main-wing leading edge 41. This leads to an improvement in heat exchange efficiency between bleed air and the main-wing leading edge 41.

### Second embodiment

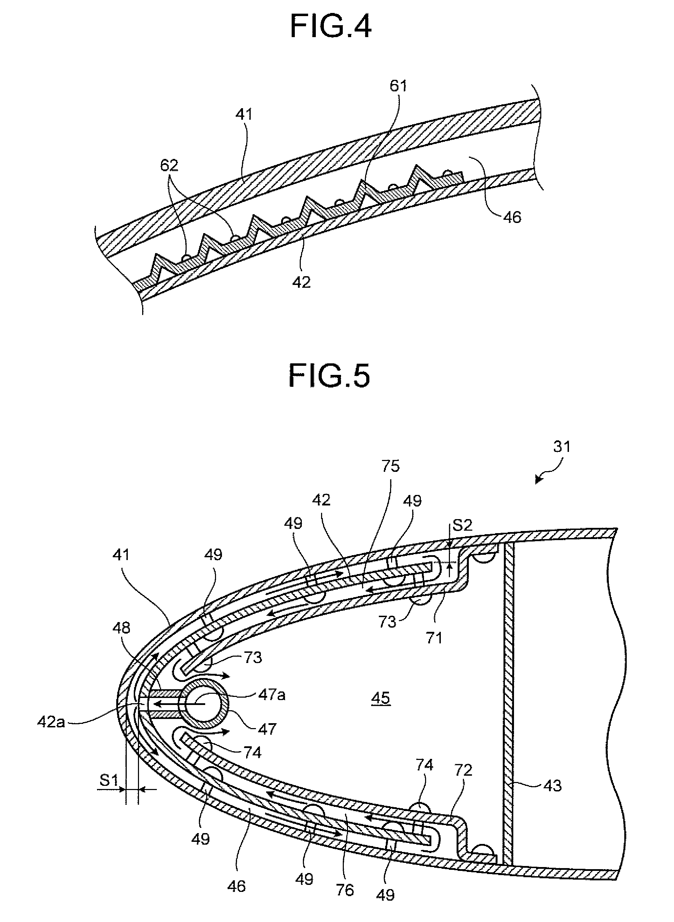

FIG. 4 is a cross-sectional view of relevant parts of a main wing to which a deicing device for a wing leading edge of an aircraft according to a second embodiment of the present invention is applied. Members having functions identical to those in the embodiment described above are denoted by like reference signs and redundant explanations thereof will be omitted.

In the deicing device for a wing leading edge of an aircraft according to the second embodiment, as shown in FIG. 4, the guide plate 42 is fixed inside the main-wing leading edge 41, thereby forming the hot air passage 46 therebetween. Consequently, in the hot air passage 46, a space at the distal end of the main-wing leading edge 41 is formed to be smaller than that on the downstream side in the bleed-air flowing direction.

In the present embodiment, a fin 61 is arranged in the hot air passage 46. Specifically, the fin 61 is formed by a plate with a plurality of recesses and projections, and fixed to the outer side of the guide plate 42 by a rivet 62 such that the fin 61 protrudes toward the main-wing leading edge 41. In this case, the fin 61 can be fixed to the inner side of the main-wing leading edge 41 such that the fin 61 protrudes toward the guide plate 42, or the fin 61 can be formed together with the main-wing leading edge 41 or the guide plate 42 into one. In addition, the shape of the fin 61 is not limited to the shape described in the present embodiment.

Accordingly, when bleed air flows through the hot air passage 46, the bleed air is in contact not only with the inner side of the main-wing leading edge 41 and the outer side of the guide plate 42, but also with the fin 61, thereby increasing the quantity of heat received by the main-wing leading edge 41. Furthermore, because the bleed air is converted into a turbulent flow by the fin 61, a further increase in the quantity of heat received by the main-wing leading edge 41 is expected. As a result, the main-wing leading edge 41 can be heated efficiently.

As described above, in the deicing device for a wing leading edge of an aircraft according to the second embodiment, because the fin 61 is provided in the hot air passage 46, with the bleed air flowing through the hot air passage 46, a heat transfer area in the hot air passage 46 is increased and a turbulent flow is generated, thereby increasing the quantity of heat received by the main-wing leading edge 41 and promoting heat exchange.

### Third embodiment

FIG. 5 is a schematic configuration diagram of a deicing device for a wing leading edge of an aircraft according to a third embodiment of the present invention. Members having functions identical to those in the embodiments described above are denoted by like reference signs and redundant explanations thereof will be omitted.

In the deicing device for a wing leading edge of an aircraft according to the third embodiment, as shown in FIG. 5, the guide plate 42 is fixed inside the main-wing leading edge 41, thereby forming the hot air passage 46 therebetween. In the hot air passage 46, a space at the distal end of the main-wing leading edge 41 is formed to be smaller than a space on the downstream side in the bleed-air flowing direction (S1<S2).

In the present embodiment, second guide plates 71 and 72 are arranged inside the guide plate 42 with a predetermined space therefrom, and the second guide plate 71 on one part is positioned toward the topside of the main wing, while the second guide plate 72 on the other part is positioned toward the underside of the main wing. The second guide plates 71 and 72 are tightly attached to the main-wing leading edge 41 such that their front ends extend near the duct pipe 47 and their rear ends enclose the rear ends of the guide plate 42. The second guide plates 71 and 72 are fixed to the main-wing leading edge 41 and the guide plate 42 by a number of rives 73 and 74, respectively.

Second hot air passages 75 and 76, through which bleed air discharged from the hot air passage 46 flows along the inner side of the hot air passage 46, are provided between the guide plate 42 and the second guide plates 71 and 72.

Accordingly, bleed air is supplied from the duct pipe 47 through the connecting tube 48 to the hot air passage 46 at the distal end of the main-wing leading edge 41, and then flows upward and downward separately from this distal end to the rear side along the inner side of the main-wing leading edge 41. At this time, the bleed air flows through the hot air passage 46 at a higher speed at the distal end of the main-wing leading edge 41 where the flow passage is narrower, and flows at a lower speed as it approaches to the rear side. With this configuration, the bleed air flows stably in the hot air passage 46 toward its downstream side, and promotes heat exchange with the main-wing leading edge 41 from its distal end to its downstream side, so that the entire region of the main-wing leading edge 41 is effectively heated, thereby preventing formation of ice adhering to the outer side of the distal end of the main-wing leading edge 41.

Because the rear ends of the hot air passage 46 are closed by the second guide plates 71 and 72, the bleed air flowing rearward through the hot air passage 46 returns back at the closed rear ends and then flows forward through the second hot air passages 75 and 76. At this time, a decrease in the temperature of the bleed air flowing through the hot air passage 46 is suppressed by the bleed air flowing through the second hot air passages 75 and 76.

As described above, in the deicing device for a wing leading edge of an aircraft according to the third embodiment, the second guide plates 71 and 72 are arranged inside the guide plate 42 with a predetermined space therefrom to provide the second hot air passages 75 and 76 through which bleed air discharged from the hot air passage 46 flows along the inner side of the hot air passage 46. With this configuration, the temperature of bleed air flowing through the hot air passage 46 is maintained by bleed air flowing through the second hot air passages 75 and 76, so that the main-wing leading edge 41 can be efficiently heated by the bleed air.

### Fourth embodiment

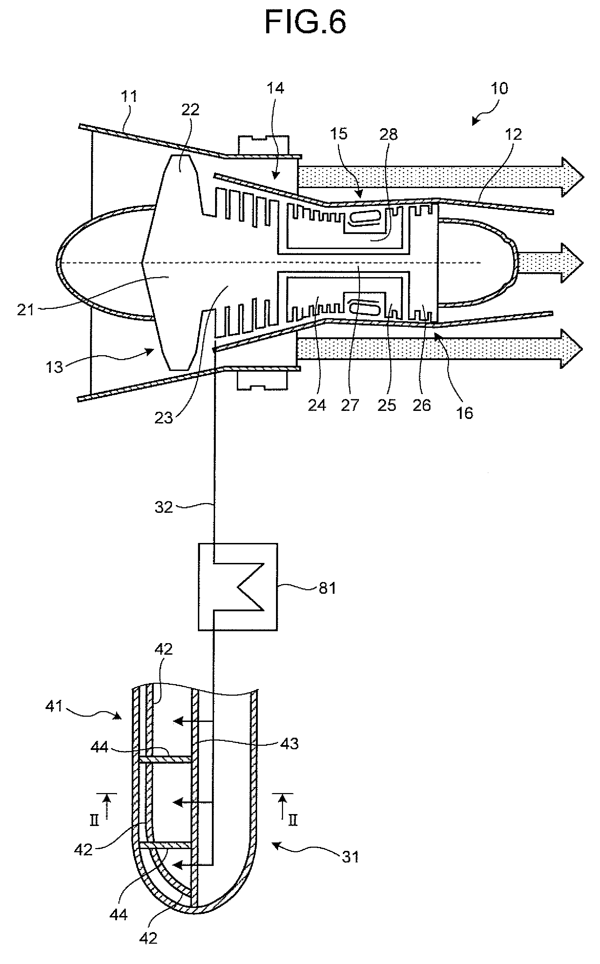

FIG. 6 is a schematic configuration diagram of a deicing device for a wing leading edge of an aircraft according to a fourth embodiment of the present invention. Members having functions identical to those in the embodiments described above are denoted by like reference signs and redundant explanations thereof will be omitted.

In the deicing device for a wing leading edge of an aircraft according to the fourth embodiment, as shown in FIG. 6, the bleed-air supply line 32 is designed to supply bleed air extracted from an upstream position of the compressor 14 (the low-pressure compressor 23) of the gas turbine 10 to the main-wing leading edge 41. A bleed-air heater 81 is provided in a middle part on the bleed-air supply line 32. The bleed-air heater 81 is a high-temperature device incorporated in an aircraft such as a hydraulic device that actuates flaps. For example, an air pipe that constitutes the bleed-air supply line 32 is provided on an outer circumference of a hydraulic cylinder that constitutes the hydraulic device.

Accordingly, bleed air extracted from the compressor 14 of the gas turbine 10 is supplied to the main wing 31 after being heated by the bleed-air heater 81, and thus the main-wing leading edge 41 (see FIG. 2) can be heated effectively.

As described above, in the deicing device for a wing leading edge of an aircraft according to the fourth embodiment, there is provided the bleed-air heater 81 that supplies bleed air extracted from the compressor 14 of the gas turbine 10 for an aircraft to the duct pipe 47 of the main-wing leading edge 41 after heating the bleed air by the high-temperature device incorporated in an aircraft. Accordingly, because the bleed air is supplied to the duct pipe 47 after being heated by the bleed-air heater 81, the main-wing leading edge can be securely heated by the bleed air. In addition, because high-temperature bleed air is used, the supply amount of the bleed air can be decreased, and a reduction in efficiency of the gas turbine 10 can be suppressed. Meanwhile, because the high-temperature device can be cooled by the bleed air, the cooling air amount required for cooling the high-temperature device can be decreased, and thus a reduction in efficiency of the gas turbine 10 can be suppressed also with this configuration.

In the embodiments described above, the space in the hot air passage 46 is formed to be gradually larger from the distal end of the main-wing leading edge 41 toward the downstream side in the bleed-air flowing direction; however, the space can be formed to be larger in a stepwise manner.

In the respective embodiments described above, in the hot air passage 46, the space (the flow passage area) at the distal end of the main-wing leading edge 41 is set to be smaller than the space (the flow passage area) on the downstream side in the bleed-air flowing direction. However, the present invention is not limited to this configuration. For example, in the hot air passage 46, the space (the flow passage area) S2 on the downstream side in the bleed-air flowing direction can be formed to be smaller than the space (the flow passage area) S1 on the distal-end side of the main-wing leading edge 41. In this case, when bleed air is supplied to the hot air passage 46, the bleed air flows at a higher speed on its downstream side, and thus it can be supplied stably to the downstream side of the hot air passage 46, and the main-wing leading edge 41 can be heated effectively.

The respective embodiments described above have explained a case of applying the deicing device for a wing leading edge of an aircraft according to the present invention to an aircraft main wing; however, the application of the deicing device is not limited to a main wing, and can be also applied to other wings such as a tail.

### Industrial Applicability

According to the deicing device for a wing leading edge of an aircraft and the aircraft main wing according to the present invention, in a hot air passage, a flow passage area on a distal-end side of a wing leading edge and a flow passage area on a downstream side in a bleed-air flowing direction are set to be different. Therefore, it is possible to appropriately prevent formation of ice adhering to an outer side of the wing leading edge by heating the wing leading edge effectively, and the deicing device and the aircraft main wing can be applied to any type of wings of an aircraft.

### Reference Signs List

- 11: fan casing
- 12: main body casing
- 13: fan
- 14: compressor
- 15: combustor
- 16: turbine
- 23: low-pressure compressor
- 24: high-pressure compressor
- 25: high-pressure turbine
- 26: low-pressure turbine
- 31: main wing
- 32: bleed-air supply line
- 41: main-wing leading edge
- 42: guide plate
- 45: hot air chamber
- 46: hot air passage
- 47: duct pipe (bleed-air supply unit)
- 49: fixture (space-amount adjusting member, connecting member)
- 61: fin
- 71, 72: second guide plate
- 75, 76: second hot air passage
- 81: bleed-air heater

## Claims

1. A deicing device for a wing leading edge of an aircraft, the deicing device comprising:
a curve-shaped wing leading edge;
a curve-shaped guide plate arranged inside the wing leading edge with a predetermined space therefrom;
a hot air passage provided by the wing leading edge and the guide plate along an inner side of the wing leading edge; and
a bleed-air supply unit that supplies bleed air to the hot air passage, wherein
in the hot air passage, a flow passage area on a distal-end side of the wing leading edge and a flow passage area on a downstream side in a bleed-air flowing direction are set to be different.

2. The deicing device for a wing leading edge of an aircraft according to claim 1, wherein in the hot air passage, a flow passage area on a distal-end side of the wing leading edge is formed to be smaller than a flow passage area on a downstream side in a bleed-air flowing direction.

3. The deicing device for a wing leading edge of an aircraft according to claim 1, wherein in the hot air passage, a flow passage area on a downstream side in a bleed-air flowing direction is formed to be smaller than a flow passage area on a distal-end side of the wing leading edge.

4. The deicing device for a wing leading edge of an aircraft according to any one of claims 1 to 3, wherein a space-amount adjusting member that sets an amount of a space in the hot air passage to a predetermined amount is provided between the wing leading edge and the guide plate.

5. The deicing device for a wing leading edge of an aircraft according to claim 4, wherein the space-amount adjusting member functions as a connecting member that connects the wing leading edge and the guide plate.

6. The deicing device for a wing leading edge of an aircraft according to any one of claims 1 to 5, wherein a fin is arranged in the hot air passage.

7. The deicing device for a wing leading edge of an aircraft according to any one of claims 1 to 6, wherein a second guide plate is arranged inside the guide plate with a predetermined space therefrom, so as to provide a second hot air passage through which bleed air to be discharged from the hot air passage flows along an inner side of the hot air passage.

8. The deicing device for a wing leading edge of an aircraft according to any one of claims 1 to 7, wherein a bleed air heater that supplies bleed air extracted from a compressor of a gas turbine for an aircraft to the bleed-air supply unit after the bleed air is heated by a high-temperature device incorporated in an aircraft is provided.

9. An aircraft main wing provided with the deicing device for a wing leading edge of an aircraft according to any one of claims 1 to 8.
